# EUROPEAN PATENT SPECIFICATION

(11) **EP 2 560 500 B1**
(45) Date of publication and mention of the grant of the patent: **14.05.2014**
(21) Application number: 11714702.5
(22) Date of filing: 13.04.2011
(51) Int. Cl.: A23K 1/00, A23K 1/16, A23L 1/00, A23L 1/236, A23G 3/38, A23G 3/42

(54) **Lozenges from erythritol and isomalt**
Pastillen aus Erythritol und Isomalt
Losanges de pastilles d'érythrite et d'isomalt

(30) Priority: 19.04.2010 EP 10004121
(43) Date of publication of application: 27.02.2013
(73) Proprietor: Cargill, Incorporated, Wayzata, MN 55391 (US)
(72) Inventor: BOGHMANS, Catherine, Patricia, L., B-1852 Beigem (BE); CORTEBEECK, Bart, B-2830 Willebroek (BE); MEEUS, Liesbeth, Maria, Fernande, B-3078 Everberg (BE); SIPS, Cornelius, Adrianus, Petrus, NL-6041 VC Roermond (NL)
(74) Representative: Elseviers, Myriam
(86) International application number: PCT/EP2011/001866
(87) International publication number: WO 2011/131313

(56) References cited:
- EP-A1- 0 530 995
- FR-A1- 2 846 518
- KR-A- 20020 007 725
- FRITZSCHING B: "ISOMALT IN HARD CANDY APPLICATIONS", MANUFACTURING CONFECTIONER, CHICAGO, IL, US, vol. 75, no. 11, 1 January 1995 (1995-01-01), pages 65-73, XP000862872, ISSN: 0163-4364

## Description

### Field of the Invention

The present invention relates to lozenges of erythritol and isomalt and the process for preparing these lozenges.

### Background of the Invention

Lozenges are a form of confectionery usually made from a sugar which has been reduced to a state of fineness and which is kneaded into a doughy consistency with water and a binding agent, commonly gelatin or a gum such as gum Arabic. The dough is laminated and while still plastic the dough is cut into suitable shapes which are dried and allowed to harden.

An increasing interest in reduced calorie products as an aid to healthy living has created a market for lower calorie confectionery which in effect means replacing the sugar by a lower calorie sweetener of the same or similar bulk sweetness.

EP 0 530 995 describes a lozenge having a reduced calorie content and which is essentially non-cariogenic.

KR 2002 0007725 A discloses a low-calorie sugar-free hard candy, which contains 1-20 wt.% powdery and granulated erythritol composition and 80-99 wt.% of at least one kind of glycoalcohol selected from isomalt, maltitol and xylitol. It further contains 0.1-5.0 wt.% of sweetener, such as aspartame, stevioside, saccharin and the like. Preparation of said candies by heating the ingredient mixture to a temperature of 160°C, followed by shaping and drying is disclosed as well.

FR 2 846 518 A1discloses sugar-free boiled sweets, which comprise a sweetening composition (A) of (by weight, dry basis) 10-40, preferably 15-25, % of branched maltodextrin (MD) and the balance is isomalt. Preparation of said boiled sweets by heating the ingredient mixture to a temperature of 180°C, followed by shaping and drying is disclosed as well.

FRITZSCHING B: "ISOMALT IN HARD CANDY APPLICATIONS", MANUFACTURING CONFECTIONER, CHICAGO, IL, US, vol. 75, no. 11, 1 January 1995 (1995-01-01), pages 65-73, ISSN: 0163-4364 discloses that isomalt is a sugar replacer, which has a sweetening power of 45-60% of the sweetness that would result from the same amount of sucrose. Furthermore, it enhances flavour transfer in foods. It can be used in boiled sweets in combination with intensive sweeteners. The use of isomalt in hard candies is specifically disclosed. Hard candies comprising about 80% isomalt and hygroscopic sugar replacers or bulking agents show good shelf life.

There is still a need for reducing the amount of the usual applicable binding agent or completely substituting it. The current invention provides such a solution.

### Summary of the Invention

The current invention relates to a lozenge comprising a sweetener and binding agent characterized in that the lozenge is comprising at least 70% w/w sweetener, preferably at least 80% w/w, more preferably at least 90% w/w sweetener and the binding agent comprises isomalt, preferably the binding agent is consisting of isomalt, as claimed.

The current invention further relates to a process for producing a lozenge according to the present invention and is comprising the following steps:
a) Kneading the sweetener and the binding agent into a smooth homogeneous paste,
b) Forming the paste into suitable shapes and,
c) Drying the shapes at a temperature in the range of from 40 to 50°C.

It further relates to a composition consisting of isomalt and at least 70% w/w erythritol, preferably at least 80% w/w, more preferably at least 90% w/w erythritol and wherein the amount of erythritol and isomalt is from 99/1 to 70/30 weight percent based on dry substance of composition, as claimed.

Finally it relates to the use of isomalt as a binding agent in the preparation of a lozenge and the use of said lozenge in the field of food, feed, pharma, cosmetics, detergents, fertilizer or agrochemical products, as claimed.

### Detailed Description

The current invention relates to a lozenge comprising a sweetener and binding agent characterized in that the lozenge is comprising at least 70% w/w sweetener, preferably at least 80% w/w, more preferably at least 90% w/w sweetener and the binding agent comprises isomalt, preferably the binding agent is consisting of isomalt.

Isomalt is understood to refer to an almost equimolar mixture of 6-glucopyranosyl-sorbitol (6-GPS) and 1-glucopyranosyl-mannitol (1-GPM), and the weight percentage can vary between 43 to 57% of 6-GPS to 57% to 43% of 1-GPM. Any other ratio of both components is falling under the definition of the mixture containing 6-glucopyranosyl-sorbitol, and 1-glucopyranosyl-mannitol. These mixtures can be enriched in one of the component, be it 1-GPM or 6-GPS or another isomer, 1-glycopyranosyl-sorbitol (1-GPS) may be present as well. The mixtures containing 6-glucopyranosyl-sorbitol, and/or 1-glucopyranosyl-mannitol, as well as the isomalt may further comprise minor amounts of other substances such as mannitol, sorbitol, hydrogenated or non-hydrogenated oligosaccharides as well as optionally glucose, fructose and/or sucrose, trehalulose, isomaltulose or isomaltose. Preferably isomalt containing an almost equimolar mixture of 6-glucopyranosyl-sorbitol (6-GPS) and 1-glucopyranosyl-mannitol (1-GPM) is used.

Surprisingly it was found that isomalt has properties like a binding agent, i.e. to a certain extent it is capable of establishing binding between the individual particles in the composition and further in the binding during the kneading step in the process of preparing a lozenge. Lozenges are prepared by adding a liquid to a powder or a blend of powders until a dough or paste is obtained. Without being bound to any particular explanation that would limit the scope of protection, it can be understood that isomalt provides the binding capacity in order to prepare a suitable dough or paste. Suitable lozenges wherein isomalt is the sole binding agent are prepared according to the current invention. Furthermore, isomalt is beyond being a binding agent also a suitable softener. The lozenges prepared with a binding agent comprising isomalt are softer than lozenges that do not contain any isomalt.

In addition, the amount of sweetener and binding agent in the lozenge of the current invention is from 99/1 to 70/30 weight percent based on dry substance of lozenge. Other potential weight ratios of sweetening agent and binding agent are 98/2, 97/3, 96/4, 95/5, 90/10, 85/15 or 80/20.

In a preferred embodiment, isomalt is the sole binding agent used in the composition of the invention and in the preparation of the lozenge, but in other embodiments it may be used in combination with other binding agents, such as hydrocolloids. The hydrocolloid is selected from the group consisting of gelatine, carrageenan, locust bean gum, pectin, alginate, guar gum, xanthan gum, gum Arabic, starch derivatives, and mixture of two or more thereof. Preferably gelatine and/or gum Arabic is used.

Gelatin is a protein produced by partial hydrolysis of collagen extracted from the boiled bones, connective tissues, organs and some intestines of animals. It is commonly used as a gelling agent. In a preferred embodiment, the lozenge of the current invention is free from gelatine.

Carrageenan is a collective term for polysaccharides prepared by alkaline extraction from red seaweed. The basic structure of carrageenan consists of alternating 3-linked -β-D-galactopyranose and 4-linked-α-D-galactopyranose units. The regular backbone structure of the basic structure of carrageenan is disrupted by a more or less ordered distribution of sulphate hemi ester groups. Carrageenan can also contain some methoxy and pyruvate groups. Carrageenans are linear polymers of about 25,000 galactose derivatives.

Locust bean gum is a galactomannan similar to guar gum. It is polydisperse and consists of non-ionic molecules made up of about 2000 residues. Locust bean gum is less soluble and has lower viscosity than guar gum as it has fewer galactose branchpoints. It needs heating to dissolve but is soluble in hot water.

Pectin is a heterogenous grouping of acidic structural polysaccharides found in fruit and vegetables and mainly prepared from waste citrus peel and apple pomace. Pectin has a complex structure, and a large part of the structure consists of homopolymeric partially methylated poly-α-(1-4)-D-galacturonic acid residues with substantial hairy non-gelling areas of alternating α-(1-2)-L-rhamnosyl-α-(1-4)-D-galacturonosyl sections containing branch points with mostly neutral side chains (1 - 20 residues) of mainly L-arabinose and D-galactose. The properties of pectins depend on the degree of esterification, which is normally about 70%. The low-methoxy pectins are <40% esterified, while high-methoxy pectins are > 43% esterified, usually 67%. Amidated pectin is also a suitable candidate for the hydrocolloid of the current invention.

Alginates are produced by seaweeds and are linear unbranched polymers containing β-(1-4)-linked D-mannuronic acid and α-(1-4)-linked L-guluronic acid residues. Alginates consist of blocks of similar and strictly alternating residues.

Guar gum is a galactomannan consisting of a (1-4)-linked β-D-mannopyranose backbone with branchpoints from their 6-positions linked to α-D-galactose. There are between 1.5 to 2 mannose residues for every galactose residue. Guar gum is made up of non-ionic polydisperse rod-shaped polymers consisting of molecules made up of about 10,000 residues. Guar gum is highly water-soluble and e.g. more soluble than locust bean gum.

Xanthan gum is a microbial desiccation resistant polymer prepared commercially by aerobic submerged fermentation. It is naturally produced to stick bacteria to the leaves of cabbage-like plants. Xanthan gum is an anionic polyelectrolyte with a β-(1-4)-D-glucopyranose glucan backbone with side chains of (3-1)-α-linked D-mannopyranose(2-1)-β-D-glucuronic acid-(4-1)-β-D-mannopyranose on alternating residues. Slightly less than half of the terminal mannose residues are 4,6-pyruvated and the inner mannose is mostly 6-acetylated. Each molecule consists of about 7000 pentamers and the gum is less polydisperse than most hydrocolloids.

Gum Arabic is a natural gum made of hardened sap taken from two species of the acacia tree; Acacia senegal and Acacia seyal. It is a mixture of saccharides and glycoproteins which gives it the properties of a glue, and binder which is edible by humans.

Starch is a mixture of two molecular entities, namely amylose and amylopectin. Amylose is the starch polysaccharide that primarily consists of long chained α-1,4-linked D-glucose molecules with a DPn between about 500-5000. Amylopectin consists of relatively short chain alpha-1,4-linked D-glucose molecules interconnected by many alpha-1 ,6-branch points (approximately 1/25). The molecular weight of amylopectin molecules is in the range of several millions. The amylopectin / amylose ratio can vary between 100:0 and 10:90 depending on the plant source. Typical commercial starch sources are maize, waxy maize, high amylose maize, wheat, potato, tapioca, rice, pea and sago. Starches are organized in the form of cold water insoluble granules with a diameter from 0.5 µm to about 100 µm. These starch granules can be obtained depending on the original minor amounts of proteins (usually less than 0.5%) or lipids (up to 1%). Starches can be further modified. Modified starches are products whose properties have been altered by physical, chemical means or by the introduction of substituents and whose granular and molecular structures, respectively, are more or less retained. Chemical modification can occur by: esterification or etherification and oxidation reactions at the hydroxyl groups at C atoms 2, 3 and 6. Typical substituents at the hydroxyl groups in modified starches are acetyl, n-octenylsuccinate, phosphate, hydroxypropyl, or carboxymethyl groups. Furthermore, the modification can also lead to the formation of cross-links by substituents like phosphate, adipate or citrate. These chemical modifications can be followed by scissions of the glucosidic alpha-1,4 and alpha-1,6 bonds. Such a partial degradation of starch is usually obtained by treatment with acids, oxidizing agents or with hydrolytic enzymes. Finally, native or modified starch can be converted into a cold-water dispersible form by a heat-moisture treatment followed by drying (e.g. drum drying or spray-cooking). Preferably the starch derivatives of the current invention are thinned starches such as C*AraSet thinned starch provided by Cargill Incorporated.

Furthermore the lozenge wherein the binding agent is consisting of isomalt and the hydrocolloid has a weight ratio of 10/0.5 to 10/2 isomalt to hydrocolloid, alternatively a weight ratio of 10/1 (isomalt to hydrocolloid). Preferably, the hydrocolloid is gelatine and/or gum Arabic.

The current invention relates to the lozenge wherein the sweetener is erythritol. Erythritol is a tetriitol which is obtainable via chemical processes, preferably other than hydrogenation of carbohydrates, and/or microbial processes or fermentation, preferably fermentation. Any grade of erythritol is suitable and without any limitation, a very suitable source of erythritol is a micronized erythritol (=turbo-milled erythritol) prepared as described in WO2009016133, or a fine grade of erythritol, and the like. Mixtures of different grades can be applied as well. Preferably the erythritol has a mean particle size smaller or equal to 100 µm.

The final lozenge has a moisture (water content) of from 1 to 10% water, preferably 2 to 8%, and moisture contents of 2.5, 3, 4, or 5 are also obtainable for the lozenge of the current invention.

The lozenge of the current invention has a water activity of from 0.4 to 0.5.

The lozenge of the current invention has a hardness of from 20 to 200 N, demonstrating that lozenges containing isomalt are softer than lozenges that do not contain isomalt.

The lozenge of the current invention with a typical diameter of 9.3 mm and a thickness of 5.8 mm, had a density of 0.90 to 1..50 g/ml, preferably 1.1 to 1.3 g/ml.

The lozenges of the current invention still show a melting peak in a DSC curve.

Furthermore, the current invention relates to a process for producing a lozenge according to the present invention and comprising the following steps:
a) Kneading the sweetener and the binding agent into a smooth homogeneous paste,
b) Forming the paste into suitable shapes and,
c) Drying the shapes at a temperature in the range of from 40 to 50°C.

In the process the sweetener can be dry mixed with the binding agent, in particular when isomalt is the sole binding agent and water is added to the dry mix, followed by thorough kneading into a smooth homogenous paste. Alternatively, an aqueous solution of the binding agent is added to the dry sweetener and is kneaded into a smooth homogenous paste. The aqueous solution of the binding agent is slowly added at a temperature in the range of from 20 to 60°C. The higher temperature is preferred when working with a binding agent that is comprising a hydrocolloid, while in the presence of isomalt as the sole binding agent the lower temperatures are most applicable as well. When starting with isomalt as solid material it is most of the times dissolved in water.

In the preferred embodiment, the lozenges of the current invention are prepared by
a) Kneading erythritol, isomalt and water into a smooth homogeneous paste,
b) Forming the paste into suitable shapes and,
c) Drying the shapes at a temperature in the range of from 40 to 50°C.

In step a) the water may be added to erythritol and isomalt or isomalt may be provided as a solution and eventually additional water can be added as well.

Depending upon the final use of the lozenge, coloring agents, flavoring agents and/or active ingredients may be added as well. Examples of suitable ingredients are analgesics, antipyretics, anti-inflammatory agents, vitamins, antibiotics, hormones, steroids, tranquilizers, sedatives and the like.

The current invention further relates to a composition consisting of isomalt and at least 70% w/w erythritol, preferably at least 80% w/w, more preferably at least 90% w/w erythritol and wherein the amount of erythritol and isomalt are from 99/1 to 70/30 weight percent based on dry substance of composition.

Furthermore, the current invention relates to the use of isomalt as a binding agent in the preparation of a lozenge. It was found that isomalt has binding properties during the kneading step in the process of preparing a lozenge. It can be understood that isomalt provides the binding capacity in order to prepare a suitable dough or paste.

Finally the current invention relates to the use of the lozenge according to the present invention in the field of food, feed, pharma, cosmetics, detergents, fertilizer or agrochemical products. In fact, without being limiting, the lozenge of the current invention can be used in food products, animal feed, health food, dietetic products, animal medicine, with bath agent, in agrochemical products, with fertilizer, with plant granules, with plant seeds or seed grains, and any other product being it ingested by humans and/or animals or any other product which can benefit from the improved properties of the lozenge of the current invention. The lozenge of the current invention can be used as a type of carrier for additives based on enzymes or microorganisms, detergent, tablets, vitamins, flavors, perfumes, acids, sweeteners or various active ingredients with medicinal or non-medicinal applications. Eventually mixtures of additives can be applied.

The invention will hereunder be illustrated in the form of non-limiting examples.

### Examples

### Example 1 - erythritol lozenge + addition of an Isomalt solution.

The method of manufacturing the lozenge involved 3 steps.

In a first step a 70% by weight, of an isomalt solution was prepared by dissolving C*IsoMaltidex 16502 (Cargill) into tap-water and was boiled until a clear solution was obtained. This solution was then stored at 60°C.

A Hobart (model N50-G) was filled with 910 g of the sweetener, Zerose™ erythritol 16961 (Cargill).

In the second step, this sweetener was mixed for 2 minutes by using a flat beater.
50% of the isomalt solution prepared in the first step was added to the sweetener and then mixed for 3 minutes.
Finally the remaining 50% of the isomalt solution was added and mixed again for 3 minutes until a smooth and homogeneous paste was obtained. In total 300 ml of isomalt solution was added.

In a final third step the paste was manually further kneaded for approximately 1 minute, before it was rolled-out and cut into shapes and further being stoved at 45°C to harden the lozenges.

The moisture content of the final lozenge was measured by Karl Fisher (Mettler Toledo DL 38) method and the dry matter was calculated to be 93.2%.

The cylindrical lozenge with a diameter of 9.3 mm and a thickness of 5.8 mm, had a density of 1.10 g/ml. The density was calculated as follows: the volume of a cylinder is π x r² x h. The weight of the tablet divided by the volume of the lozenge results in the above mentioned density.

### Example 2 -erythritol lozenges - addition of IsoMalt powder followed by the addition of water.

The method of manufacturing the lozenge involved 3 steps.

In a first step, 90% of Zerose™ erythritol 16961 (Cargill) and 10% of C*IsoMalt 16502 (Cargill) were dry blended together in a Hobart Mixer (model N50-G), for 2 minutes, by using a flat beater.

In the second step, tap-water was slowly added (50% of the total amount of 120 ml) and mixed for 3 minutes.

The remaining 50% of the water was then added followed by another 3 minutes of blending.

In the third step the paste was removed from the Hobart Mixer, and further manually kneaded for approximately 1 minute, before it was rolled-out and cut into shapes before being stoved at 45°C to harden the lozenges.

The moisture content of the final lozenge was measured by Karl Fisher (Mettler Toledo DL 38) method and the dry matter was calculated to be 94.8%.

### Example 3-7 -erythritol-isomalt lozenges - in comparison with erythritol lozenges without isomalt and in comparison with hard candy preparation.

Comparison example 3: erythritol (Zerose Turbo Milled (26µm) from Cargill) + gelatine solution 10% solution of (150bl (Rouselot))

Example 4: 90% erythritol (Zerose Turbo Milled (26µm) from Cargill)/ 10% isomalt C*IsoMaltidex 16502 ((33µm) from Cargill + water

Example 5: 80% erythritol (Zerose Turbo Milled (26µm) from Cargill)/ 20% isomalt C*IsoMaltidex 16502 ((33µm) + water

Example 6: 80% erythritol (Zerose Turbo Milled (26µm) from Cargill)/ 20% isomalt C*IsoMaltidex 16502 ((33µm) + gelatine solution 10% solution of (150bl (Rouselot))

Example 7: 20% erythritol (Zerose 16957 from Cargill) / 80% isomalt C*IsoMaltidex 16500 from Cargill + water

Lozenges were prepared in a Hobart

Hard boiled candies were prepared in a Candy cooker

### Recipe's:

| | Examples | | | | |
|---|---|---|---|---|---|
| | 3 | 4 | 5 | 6 | 7 |
| erythritol | 86.40% | 80.10% | 71.80% | 69.70% | 15.20% |
| isomalt | | 8.90% | 18.00% | 17.50% | 61.50% |
| Gelatine (10%sol.) | 13.60% | | | 12.80% | |
| Water | | 11.00% | 10.20% | | 23.30% |

### Method of preparation:

Lozenges : examples 3-6 in (Hobart)
   - Dissolve gelatine 150bl into warm water and store solution between 45°C and 60°C
   - Before adding erythritol or isomalt into Hobart, bring powders over a sieve to remove lumps
   - Blend the powders, for 1', in a Hobart using a flat beater
   - Add around 50ml of the liquid to the powder and blend for another 2'
   - Add liquid until desired dough texture (= homogeneous dough which is not sticky) is obtained
   - the dough is taken out of the Hobart and manually kneaded for another 1'
   - Rolling out of the dough until appropriate thickness of about 5 mm.
   - Forms are printed out from the dough
Comparative example 7: Method of preparation Hard Boiled Candy
   - Boil water
   - Weight the amount of water water and deposit in the candy cooker
   - Deposit the isomalt and erythritol into the warm water
   - Boil to 160°C
   - Deposit into moulds

### Method of Hardness

Applying Erweka type Multicheck 5 - method 2.9.8 of Pharmacopoeia 7.0 - resistance to crushing of tablets - applying constant speed (2.3 mm/s).

Method of Aw (water activity).

Applying Aqualab CX-2 (= a dew point hygrometer).

Results:

| | Hardness | Moisture | Aw | Density |
|---|---|---|---|---|
| Ex.3 | 259N | 0.72% | 0.185 | 1.4 |
| Ex.4 | 148N | 2.63% | 0.410 | 1.5 |
| Ex.5 | 36N | 4.84% | 0.512 | 1.1 |
| Ex 6 | 122N | 5.13% | 0.424 | 1.3 |
| Ex.7 | - | 3.68% | 0.254 | 1.5 |

The lozenges have a hardness of from 20 to 200 N.

The water activity is from 0.4 to 0.5.

The comparative example of lozenge without isomalt is much harder (259 N).

The comparative example of hard candy is so hard that the hardness cannot be measured with the applied method. The water activity is below 0.3.

The DSC curves of the lozenges show a melting peak whereas the DSC curve of the hard candy does not show such a melting peak.

## Claims

1. A lozenge comprising a sweetener and binding agent **characterized in that** the lozenge is comprising at least 70% w/w sweetener, preferably at least 80% w/w, more preferably at least 90% w/w sweetener and the binding agent comprises isomalt, preferably the binding agent is consisting of isomalt and wherein the sweetener is erythritol, preferably erythritol with a mean particle size smaller or equal to 100 µm.

2. The lozenge according to claim 1 wherein the amount of sweetener and binding agent is from 99/1 to 70/30 weight percent based on dry substance of lozenge.

3. The lozenge according to claim 1 or 2 wherein the binding agent is isomalt and a hydrocolloid selected from the group consisting of gelatine, carrageenan, locust bean gum, pectin, alginate, guar gum, xanthan gum, gum Arabic, starch derivatives and mixture of two or more thereof.

4. The lozenge according to claim 3 wherein the binding agent is consisting of isomalt and the hydrocolloid in a weight ratio of 10/0.5 to 10/2.

5. The lozenge according to anyone of the claims 1 to 4 wherein the lozenge comprises 1 to 10% water, preferably 2 to 8%.

6. The lozenge according to anyone of claims 1 to 5 wherein the lozenge has a hardness of from 20 to 200 N.

7. A process for producing a lozenge according to anyone of claims 1 to 6 and comprising the following steps:
d) Kneading the sweetener and the binding agent into a smooth homogeneous paste,
e) Forming the paste into suitable shapes and,
f) Drying the shapes at a temperature in the range of from 40 to 50°C.

8. A composition for the preparation of a lozenge and which is consisting of isomalt and at least 70% w/w erythritol, preferably at least 80% w/w, more preferably at least 90% w/w erythritol and wherein the amount of erythritol and isomalt is from 99/1 to 70/30 weight percent based on dry substance of composition.

9. Use of isomalt as a binding agent in the preparation of a lozenge comprising a sweetener and binding agent **characterized in that** the lozenge is comprising at least 70% w/w sweetener, preferably at least 80% w/w, more preferably at least 90% w/w sweetener and the binding agent comprises isomalt, preferably the binding agent is consisting of isomalt and wherein the sweetener is erythritol, preferably erythritol with a mean particle size smaller or equal to 100 µm.

10. Use of the lozenge according to anyone of the claims 1 to 6 in the field of food, feed, pharma, cosmetics, detergents, fertilizer or agrochemical products.

## Patentansprüche

1. Bonbon umfassend ein Süßungsmittel und ein Bindemittel, **dadurch gekennzeichnet, dass** das Bonbon mindestens 70 Gew.-% Süßungsmittel, bevorzugt mindestens 80 Gew.-%, noch bevorzugter mindestens 90 Gew.-% Süßungsmittel umfasst und das Bindemittel Isomalt umfasst, das Bindemittel bevorzugt aus Isomalt besteht und wobei das Süßungsmittel Erythrit, bevorzugt Erythrit mit einer durchschnittlichen Teilchengröße von weniger als oder gleich 100 µm ist.

2. Bonbon nach Anspruch 1, wobei die Menge an Süßungsmittel und Bindemittel 99:1 bis 70:30 Gewichtsprozent, auf die Trockensubstanz des Bonbons bezogen, beträgt.

3. Bonbon nach Anspruch 1 oder 2, wobei das Bindemittel Isomalt und ein Hydrokolloid ist ausgewählt aus der Gruppe bestehend aus Gelatine, Carrageen, Johannisbrotkernmehl, Pektin, Alginat, Guaran, Xanthangummi, Gummi arabicum, Stärkederivaten und Mischungen von zwei oder mehreren davon.

4. Bonbon nach Anspruch 3, wobei das Bindemittel aus Isomalt und dem Hydrokolloid in einem Gewichtsverhältnis von 10:0,5 bis 10:2 besteht.

5. Bonbon nach einem der Ansprüche 1 bis 4, wobei das Bonbon 1 bis 10 % Wasser, bevorzugt 2 bis 8 % Wasser umfasst.

6. Bonbon nach einem der Ansprüche 1 bis 5, wobei das Bonbon eine Härte von 20 bis 200 N aufweist.

7. Verfahren zur Herstellung eines Bonbons nach einem der Ansprüche 1 bis 6 und die folgenden Schritte umfassend:
d) Kneten des Süßungsmittels und des Bindemittels zu einer glatten, homogenen Paste,
e) Formen des Paste zu geeigneten Gestalten und
f) Trocknen der Gestalten bei einer Temperatur im Bereich von 40 bis 50 °C.

8. Zusammensetzung zur Herstellung eines Bonbons, die aus Isomalt und mindestens 70 Gew.-% Erythrit, bevorzugt mindestens 80 Gew.-%, noch bevorzugter mindestens 90 Gew.-% Erythrit besteht und wobei die Menge von Erythrit und Isomalt 99:1 bis 70:30 Gewichtsprozent, auf die Trockensubstanz der Zusammensetzung bezogen, beträgt.

9. Verwendung von Isomalt als Bindemittel bei der Herstellung eines Bonbons umfassend ein Süßungsmittel und Bindemittel, **dadurch gekennzeichnet, dass** das Bonbon mindestens 70 Gew.-% Süßungsmittel, bevorzugt mindestens 80 Gew.-%, noch bevorzugter mindestens 90 Gew.-% Süßungsmittel umfasst und das Bindemittel Isomalt umfasst, das Bindemittel bevorzugt aus Isomalt besteht und wobei das Süßungsmittel Erythrit, bevorzugt Erythrit mit einer durchschnittlichen Teilchengröße von weniger als oder gleich 100 µm ist.

10. Verwendung des Bonbons nach einem der Ansprüche 1 bis 6 auf dem Gebiet der Nahrungsmittel-, Futtermittel-, pharmazeutischen, kosmetischen, Detergentien- oder agrochemischen Produkte.

## Revendications

1. Losange comprenant un édulcorant et un agent liant, **caractérisé en ce que** le losange est constitué au moins à 70 % en poids/poids d'édulcorant, de préférence au moins à 80 % en poids/poids, mieux encore au moins à 90 % en poids/poids d'édulcorant et l'agent liant comprend de l'isomalt, de préférence l'agent liant est constitué d'isomalt, et dans lequel l'édulcorant est l'érythritol, de préférence de l'érythritol avec une taille particulaire moyenne inférieure ou égale à 100 µm.

2. Losange selon la revendication 1, dans lequel la quantité d'édulcorant et d'agent liant est de 99/1 à 70/30 % en poids sur la base de la substance sèche du losange.

3. Losange selon la revendication 1 ou la revendication 2, dans lequel l'agent liant est l'isomalt et un hydrocolloïde choisi dans le groupe constitué de la gélatine, du carrageenane, de la gomme de caroube, de la pectine, de l'alginate, de la gomme guar, de la gomme xanthane, de la gomme arabique, de dérivés de l'amidon et d'un mélange de deux de ces substances ou plus.

4. Losange selon la revendication 3, dans lequel l'agent liant est constitué d'isomalt et de l'hydrocolloïde dans un rapport pondéral de 10/0,5 à 10/2.

5. Losange selon l'une quelconque des revendications 1 à 4, dans lequel le losange comprend 1 à 10 % d'eau, de préférence 2 à 8 %.

6. Losange selon l'une quelconque des revendications 1 à 5, dans lequel le losange a une dureté de 20 à 200 N.

7. Procédé de production d'un losange selon l'une quelconque des revendications 1 à 6 et comprenant les étapes consistant à :
d) pétrir l'édulcorant et l'agent liant pour former une pâte homogène uniforme,
e) donner à la pâte des formes appropriées et
f) sécher les formes à une température dans la plage de 40 à 50 °C.

8. Composition pour la préparation d'un losange et qui est constituée d'isomalt et d'au moins 70 % en poids/poids d'érythritol, de préférence d'au moins 80 % en poids/poids, mieux encore d'au moins 90 % en poids/poids d'érythritol et dans laquelle la quantité d'érythritol et d'isomalt est de 99/1 à 70/30 % en poids sur la base de la substance sèche de la composition.

9. Utilisation d'isomalt comme agent liant dans la préparation d'un losange comprenant un édulcorant et un agent liant, **caractérisé en ce que** le losange est constitué au moins à 70 % en poids/poids d'édulcorant, de préférence au moins à 80 % en poids/poids, mieux encore au moins à 90 % en poids/poids d'édulcorant et l'agent liant comprend de l'isomalt, de préférence l'agent liant est constitué d'isomalt, et dans lequel l'édulcorant est l'érythritol, de préférence de l'érythritol avec une taille particulaire moyenne inférieure ou égale à 100 µm.

10. Utilisation du losange selon l'une quelconque des revendications 1 à 6 dans le domaine de l'alimentation humaine, de l'alimentation animale, de la pharmacie, des cosmétiques, des détergents, des engrais et des produits agrochimiques.
